# EUROPÄISCHE PATENTSCHRIFT

(11) **EP 1 091 193 B1**
(45) Veröffentlichungstag und Bekanntmachung des Hinweises auf die Patenterteilung: **16.07.2003**
(21) Anmeldenummer: 00119963.7
(22) Anmeldetag: 14.09.2000
(51) Int. Cl.: G01D 11/30, G01D 7/04, B60K 37/02

(54) **Multifunktionsanzeigegerät**
Multifunction display
Système d'affichage multifonction

(30) Priorität: 07.10.1999 DE 19948491
(43) Veröffentlichungstag der Anmeldung: 11.04.2001
(73) Patentinhaber: SIEMENS AKTIENGESELLSCHAFT, 80333 München (DE)
(72) Erfinder: Neugart, Elmar, Dipl.-Ing., c/o GDS, Ladybrand 9745 (ZA); Over, Gerhard, Dipl.-Ing., 78073 Dürrheim (DE)

(56) Entgegenhaltungen:
- EP-A- 0 338 405
- DE-A- 3 726 938

## Beschreibung

Die Erfindung betrifft ein Kombiinstrument in einer Ausgestaltung, wie es im Armaturenbrett von Kraftfahrzeugen, insbesondere von Personenfahrzeugen, Lastkraftwagen und Bussen zum Einsatz kommt. Derartige Kombiinstrumente weisen neben einer gewissen Anzahl von Kontrolleuchten diverse analoge und digitale Anzeigeeinheiten auf, um beispielsweise die Fahrzeuggeschwindigkeit, die Drehzahl des Motors und andere Meßwerte und Betriebszustände von im Fahrzeug angeordneten Vorrichtungen anzuzeigen.

Dabei sind die Anzeigeeinheiten in dem Gehäuse des Kombiinstrumentes herkömmlichenweise starr verbaut. Auch das Kombiinstrument selbst ist herkömmlichenweise in dem Armaturenbrett des Kraftfahrzeugs starr verbaut. Aufgrund der genannten starren Verbauungen können jedoch beim Ablesen der Anzeigeeinheiten Parallaxenfehler sowie Unschärfefehler auftreten, weil die individuelle Position des Augenpunktes des Fahrers je nach dessen Sitzposition und Körperbeschaffenheit variiert. Insbesondere bei der Ausbildung einer oder mehrerer Anzeigeeinheiten in LCD-Technik, bei denen ein fehlerfreies Ablesen nur innerhalb eines vordefinierten Betrachtungswinkels möglich ist, ist die starre Anordnung von Anzeigeeinheiten in Kombiinstrumenten nachteilig, weil die Brauchbarkeit der Anzeigeeinheiten dadurch einer erheblichen Einschränkung unterliegt und unvermeidbar von Eigenschaften des Fahrers abhängig ist.

Zwar ist aus dem Dokument DE 37 26 938 A1 ein Instrumentenblock mit im wesentlichen planer Anzeigefläche bekannt, der in einem Aufnahmeschacht einer Armaturentafel vertieft angeordnet ist, der durch eine Schwenklagerung um eine horizontale Achse neigungsverstellbar ist und der zusätzlich noch höhenverstellbar sein soll, damit seine Anzeigefläche auch von einem großwüchsigen Fahrer ganzflächig ablesbar ist, jedoch ist mit dieser Anordnung nicht wirklich eine individuell für den Fahrer geeignete Einstellung der im Instrumentenblock enthaltenen Anzeigeeinheiten möglich, weil die Anzeigefläche des Instrumentenblocks nur ganzheitlich verstellbar ist.

Ferner zeigt das Dokument EP 0 338 405 A2 eine mit einem einzelnen Display ausgestattete Anzeigeeinheit, die als Baueinheit schubladenartig in der Armaturentafel eines Fahrzeugs angeordnet und von dort herausziehbar und nach unten neigbar ist, jedoch findet sich auch in diesem Dokument kein Hinweis auf ein Kombiinstrument, dessen analoge und digitale Anzeigeeinheiten sich im Gehäuse eines starr in einer Armaturentafel verbauten Kombiinstruments für ihre optimale Ablesbarkeit individuell einstellen lassen.

Es ist nun die Aufgabe der vorliegenden Erfindung, ein Kombiinstrument mit integrierten diversen analogen und digitalen Anzeigeeinheiten aufzuzeigen, bei dem sich die Ablesbarkeit der Anzeigeeinheiten für jede beliebige Position des Augenpunktes des Fahrers individuell optimieren läßt, und zwar insbesondere dann, wenn die Anzeigeeinheiten aufgrund der für sie verwendeten Technologie einen eingeschränkten Betrachtungswinkel für ihre Ablesbarkeit aufweisen.

Die Aufgabe wird für ein gattungsgemäßes Kombiinstrument mit analogen oder digitalen Anzeigeeinheiten dadurch gelöst, daß die Frontseite des Gehäuses des Kombiinstruments in mehrere Teilbereiche untergliedert ist, wobei zumindest einer dieser Teilbereiche mitsamt den in ihm integrierten Anzeigeeinheiten durch einen im Kombiinstrument angeordneten Antrieb um mindestens eine Raumachse schwenkbar ist. Die abhängigen Ansprüche betreffen Ausgestaltungen der gefundenen Lösung, nämlich daß zumindest eine der Anzeigeeinheiten unabhängig von der Schwenkbarkeit des Teilbereichs, in dem diese Anzeigeeinheit angeordnet ist, um zwei Raumachsen schwenkbar ist, und daß die Anzeigeeinheiten oder die Teilbereiche des Gehäuses des Kombiinstrumentes durch mindestens einen vom Fahrer steuerbaren Stellmotor schwenkbar sind.

Anhand der einzigen beiliegenden Figur soll die gefundene Lösung nun noch weiter erläutert werden. Die **Figur** zeigt beispielhaft ein als Baueinheit in das Armaturenbrett eines Fahrzeugs einbaubares gattungsgemäßes Kombiinstrument 1 mit zwei analogen Anzeigeeinheiten 2a und 2b, einer in LCD-Technik ausgeführten digitalen Anzeigeeinheit 3 und vier verschiedenen Feldern 4a, 4b, 4c und 4d für diverse Kontrolleuchten. Auch als Pfeilleuchten 5a und 5b ausgebildete Richtungsanzeiger sind dargestellt. Dabei gliedert sich zumindest die Frontseite des Kombiinstrumentes 1 in drei Teilbereiche A, B und C, welche jeweils einen Teil der zuvor genannten Anzeigeeinheiten enthalten. Die genannten Teilbereiche A, B und C können jedoch auch durch für sich selbständige Gehäuseabschnitte realisiert sein, die formschlüssig, aber gegeneinander in mindestens einer Raumrichtung beweglich miteinander verbunden sind und zusammengenommen das Kombiinstrument 1 bilden. In der bevorzugten Ausführungsform soll der Teilbereich B des Gehäuses starr mit dem Armaturenbrett des Fahrzeugs verbunden sein, wohingegen die Teilbereiche A und C zwar vom Armaturenbrett formschlüssig umfaßt sein können, aber keine starre Verbindung zum Armaturenbrett aufweisen.

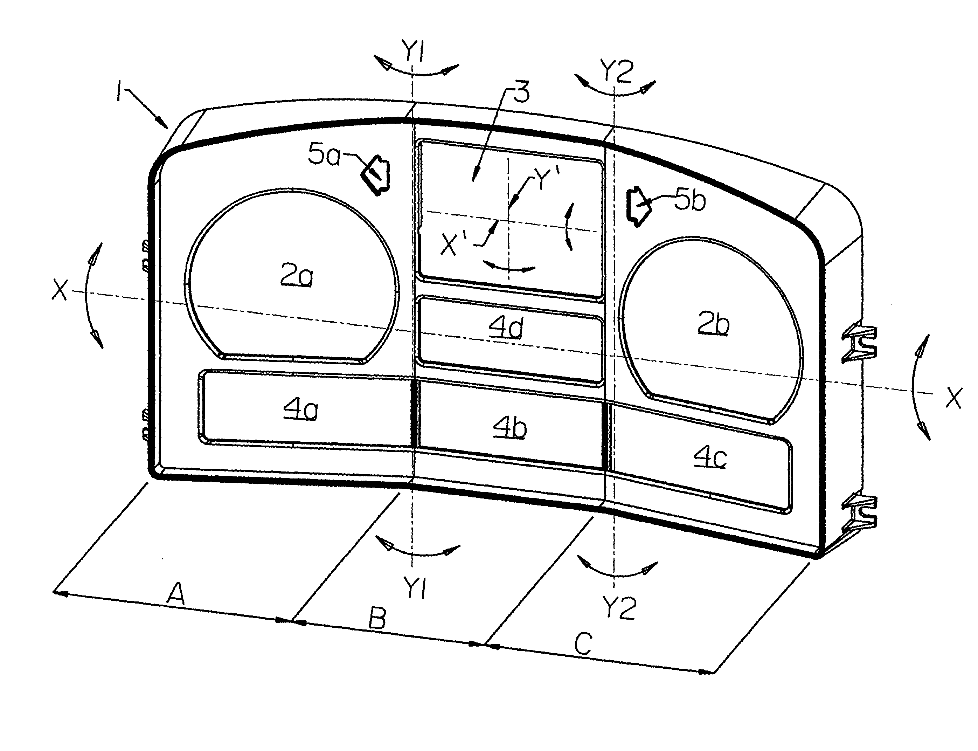

Im Gehäuse des Kombiinstrumentes 1 sind Antriebe vorgesehen, die entweder eine einzelne Anzeigeeinheit, wie die digitale Anzeigeeinheit 3, oder ganze Teilbereiche des Gehäuses des Kombiinstrumentes 1, wie die Teilbereiche A und C mit den darin integrierten Anzeigeeinheiten 2a bzw. 2b verschwenken. Die Verschwenkbarkeit erfolgt vorzugsweise in zwei Raumebenen. Wie dargestellt soll die digitale Anzeigeeinheit 3 um die horizontale Raumachse X' und die vertikale Raumachse Y' schwenkbar sein. Der Teilbereich B des Kombiinstrumentes 1 ist gemäß dem in der Figur gezeigten Beispiel um die horizontale Raumachse X, der Teilbereich A um die vertikale Raumachse Y1 und der Teilbereich C um die vertikale Raumachse Y2 schwenkbar sein. Das Kombiinstrument 1 kann jedoch auch so ausgeführt sein, daß dessen Teilbereiche A und C zusätzlich zu den vertikalen Raumachsen Y1 bzw. Y2 auch um die horizontale Raumachse X schwenkbar sind. Die Verschwenkung erfolgt vorzugsweise durch im Gehäuse des Kombiinstrumentes 1 angeordnete elektrische Stellmotore, die vom Fahrer über ein in der Figur nicht dargestelltes Bedienelement steuerbar sind. Für die Verschwenkung können jedoch statt der Stellmotore auch andersartige Antriebe oder geeignete mechanische Konstruktionen vorgesehen werden.

Wesentlich an der gefundenen Lösung ist, daß entweder ganze Teilbereiche eines gattungsgemäßen, in dem Armaturenbrett eines Fahrzeuges verbaubaren Kombiinstrumentes oder einzelne in dem Gehäuse des Kombiinstrumentes integrierte Anzeigeeinheiten durch vom Fahrer bedienbare Antriebe schwenkbar sind, um den Betrachtungswinkel der Anzeigeeinheiten für ihre optimale Ablesbarkeit entsprechend den individuellen Bedürfnissen des Fahrers einzustellen.

## Patentansprüche

1. Kombiinstrument mit analogen oder digitalen Anzeigeeinheiten (2a, 2b, 3), **dadurch gekennzeichnet, daß** die Frontseite des Gehäuses des Kombiinstruments (1) in mehrere Teilbereiche (A, B, C) untergliedert ist, wobei zumindest einer dieser Teilbereiche (A, B oder C) mitsamt den in ihm integrierten Anzeigeeinheiten (2a, 2b, 3) durch einen im Kombiinstrument (1) angeordneten Antrieb um mindestens eine Raumachse (X, Y1, Y2) schwenkbar ist.

2. Kombiinstrument nach einem der vorangegangenen Ansprüche, **dadurch gekennzeichnet, daß** zumindest eine der Anzeigeeinheiten (3) unabhängig von der Schwenkbarkeit des Teilbereichs (B), in dem diese Anzeigeeinheit (3) angeordnet ist, um zwei Raumachsen (X', Y') schwenkbar ist.

3. Kombiinstrument nach einem der vorangegangenen Ansprüche, **dadurch gekennzeichnet, daß** die Anzeigeeinheiten (2a, 2b, 3) oder die Teilbereiche (A, B oder C) des Gehäuses des Kombiinstrumentes (1) durch mindestens einen vom Fahrer steuerbaren Stellmotor schwenkbar sind.

## Claims

1. Combination instrument having analog or digital display units (2a, 2b, 3),
**characterized in that**
the front side of the housing of the combination instrument (1) is subdivided into a plurality of subregions (A, B or C), at least one of these subregions (A, B or C) being pivotable together with the display units (2a, 2b, 3) integrated in it about at least one spatial axis (X, X1, X2, X', Y, Y1, Y2, Y') by a drive arranged in the combination instrument (1).

2. Combination instrument according to one of the preceding claims,
**characterized in that** at least one of the display units (3) is arranged independently of the pivotability of the subregion (B) in which this display unit (3) is arranged, in order to be pivotable about two spatial axes (X', Y').

3. Combination instrument according to one of the preceding claims,
**characterized in that** the display units (2a, 2b, 3) or the subregions (A, B or C) of the housing of the combination instrument (1) can be pivoted by at least one servomotor which can be controlled by the driver.

## Revendications

1. Ensemble d'instruments comportant des unités d'affichage analogiques ou numériques (2a, 2b, 3),
**caractérisé en ce que**
la face frontale du boîtier de l'ensemble d'instruments (1) est divisée en plusieurs zones partielles (A, B, C), au moins l'une de ces zones partielles (A, B ou C) pouvant pivoter, avec toutes les unités d'affichages (2a, 2b, 3) qui y sont intégrées, autour d'au moins un axe de l'espace (X, Y1, Y2) au moyen d'un entraînement disposé dans l'ensemble d'instruments (1).

2. Ensemble d'instruments suivant la revendication 1,
**caractérisé en ce que**
au moins l'une des unités d'affichages (3) peut pivoter autour de deux axes de l'espace (X', Y'), indépendamment de la possibilité de pivotement de la zone partielle (B), dans laquelle cette unité d'affichage (3) est disposée.

3. Ensemble d'instruments suivant l'une des revendications précédentes,
**caractérisé en ce que**
les unités d'affichages (2a 2b, 3), ou les zones partielles (A, B ou C) du boîtier de l'ensemble d'instruments, peuvent pivoter au moyen d'au moins un moteur de positionnement pouvant être commandé par le conducteur.
